# EUROPEAN PATENT SPECIFICATION

(11) **EP 3 587 265 B1**
(45) Date of publication and mention of the grant of the patent: **01.11.2023**
(21) Application number: 18764802.7
(22) Date of filing: 24.02.2018
(51) Int. Cl.: B08B 3/02, B64D 1/18, F03D 80/55

(54) **AIR-TRANSPORTABLE DEVICE FOR PROJECTING PRESSURISED LIQUID**
LUFTTRANSPORTIERBARE VORRICHTUNG ZUR AUSGABE VON UNTER DRUCK STEHENDER FLÜSSIGKEIT
DISPOSITIF AÉROTRANSPORTABLE DE PROJECTION DE LIQUIDE SOUS PRESSION

(30) Priority: 24.02.2017 ES 201730243
(43) Date of publication of application: 01.01.2020
(73) Proprietor: Abellán Salmerón, Antoni, 08310 Argentona - Barcelona (ES)
(72) Inventor: Abellán Salmerón, Antoni, 08310 Argentona - Barcelona (ES)
(74) Representative: Sahuquillo Huerta, Jesús
(86) International application number: PCT/ES2018/070142
(87) International publication number: WO 2018/162772

(56) References cited:
- EP-A2- 0 479 181
- WO-A1-2004/022426
- WO-A1-2013/112896
- CN-U- 204 415 741
- JP-A- H0 271 887

## Description

The present invention relates to an air-transportable device for projecting pressurized liquid, for cleaning wind and photovoltaic facilities, which can also be used for extinguishing fires, by projecting high-pressure liquid products from an aircraft, preferably from a vertical take-off and landing aircraft that can be manned or unmanned.

### PRIOR ART

The loss of production from wind turbines due to so-called aerodynamic profile breakdown is generally known in the prior art. This occurs when environmental dirt produced by dust, moisture, pollution, insect impacts, and a lack of rainfall during a certain period of time causes this profile breakdown and the weight built up on the surface of the blades causes production losses estimated to be between 5% and 25%. Likewise, it has been sufficiently proven that, after effective cleaning, production values return to their original level, as can be read in [Double Stall. C. Bak et al. Riso National Laboratory, Roskilde, June 1998, ISBN 87-550-2417-3] or in *[*Dust effect of the Performance of Wind Turbine Airfoils. N. Ren et al. Journal of Electromagnetic Analysis & Applications, 2009, 1: 102-107, June 2009]*.*

Wind turbine blades are conventionally cleaned manually, with lifting cranes independent of the wind turbine structures or by means of a pulley lifting system via the rotor, in physical contact with mobile elements of the turbine. This system is slow, expensive, requires more labor and carries risks for personnel as well as for the wind turbine structure.

There is also an automatic method using pipes secured to the structure that emit a jet of water and detergents at a pressure of 50 bar for a considerable time while the blades rotate. This attempts to simulate the cleaning effects of rain. This method, however, does not cover all the angles of the blades with the same effectiveness, or the front face of the blades, which is precisely the one that needs the cleanest surface area. A large amount of water is used, and its implementation and costs are considerable.

Therefore, wind turbine maintenance is a well-accepted necessity among the operational costs, and it needs to be reduced in order to increase profitability, since the currently known methods are slow, expensive and entail a high risk for the personnel in charge of performing the cleaning operations, for example the system described in:
http://www.pro-bel.ca/ProductsAndServices-BladeAccessEquipment.html

Documents US2013133199 and ES2381351, which are based on modifying the actual blade, are also known, but are not practical for installed wind turbines.

On the other hand, helicopter cleaning is widely used in high-voltage insulators. Document WO2011042011 describes a pressurized-water cleaning system using helicopters that is especially suitable for high-voltage insulators. However, this helicopter cleaning method, like other known methods (FR2586194, IT1244559, GB2261772 or JPH0268297), is not directly applicable to the cleaning of wind turbine blades. For a start, the cleaning equipment varies, requiring an adaptation of the water-outlet pressures, an adaptation of the angle of attack, and a rotation of the outlet nozzle and the pole assembly in order to achieve profitable, safe execution times. In addition, it is important to remember that wind turbines are installed in areas of strong wind, unlike most high-voltage lines, which contributes significantly to the accuracy of cleaning and requires a solution of its own.

On the other hand, offshore wind fields are becoming increasingly common, and here it is impossible to use conventional cleaning systems (such as trucks with water cannons), so the use of air-transported cleaning systems becomes even more necessary.

In addition, the legal requirements that govern air-transported systems mean that any possibility of using one type of system in other applications is entirely ruled out. In other words, aeronautical regulations require systems to be validated for each application, so a person skilled in the art would rule out the direct application of the systems for cleaning insulators.

Systems for cleaning wind turbine blades are known in the prior art, at least from document DE102009048778, which describes a cleaning apparatus based on a multipurpose helicopter comprising a tank with a cleaning liquid, as well as a support frame that is attached to the helicopter by one side. The cleaning equipment also includes a mobile washing lance that allows the pressurized washing liquid to be directed against the blades of the wind turbine.

Document DE102010048400, on the other hand, describes a method which is used to check the structural condition of wind turbines. US2006237558, on the other hand, describes a spray device for use in aircraft such as helicopters. US4477289 also describes a system that can be air-transported by helicopter for cleaning the insulators in medium- and high-voltage lines.

As already mentioned, and in conclusion, aeronautical regulations for on-board systems are very strict (especially in the European Union "EASA" and the United States "FAA", among others). In fact, all on-board systems require strict approval procedures (STC) for each different type of aircraft. Thus, in the case of the existing cleaning systems, if for example one of them is approved for a Bell-212 helicopter, it could never be directly removed and installed on another type of helicopter, even one from the same manufacturer (such as a Bell-222) without prior technical-legal approval that, where appropriate, may impose restrictions on use and designs that are impossible to undertake, both technically and economically. Even on the same helicopter model, but with European registration, it would not be valid in other countries such as the USA.

Therefore, faced with the systems described a system that is not dependent on the type of aircraft used becomes necessary.

The document JP H02 71887 A discloses a cleaner to be loaded on helicopter to reduce the effect of a wind on a discharged cleaning soln. by forming a convergent tapered chamber on the downstream side of a cleaning soln. passage leading to a nozzle and providing a partition wall for separating the inside of the chamber in the radial direction.

The document WO 2013/112896 A1 discloses a fire suppression apparatus for fighting fires from a vehicle configured for flight is disclosed, comprising a foam and water held in separate containers aboard the vehicle that when mixed forms a fire retardant, a pump driven by an electric motor to pressurize the fire retardant, the pump including an air induction valve where air is drawn into a suction end of the pump and pressurized together with the fire retardant, and an aimable boom connected to the pump by a conduit, the boom including a nozzle on a distal end of the boom from which the pressurized fire retardant and air is dispensed toward a target.

The document EP 0 479181 A2 discloses an apparatus for cleaning the insulators of live power lines by means of helicopters. The apparatus comprises an operating structure which is suspendable by means of cables, from the barycentric hook of a helicopter and is provided with an orientable arm having a cleaning head rigidly associated therewith. The cleaning head is provided with supports for suspending rotating cleaning brushes actuated by motor means. Part of the suspension support is fixed and is constituted by a frame connected to the orientable arm, and a movable support is supported by the frame so as to be oscillatable and is controlled by motors which allow to move the related brush or brushes from an open approach position to a closed operative position in which the set of brushes of the head embraces the set of insulators.

### DESCRIPTION OF THE INVENTION

The present invention relates to an air-transportable device for projecting pressurized liquid, according to the first claim that accompanies the present description. Specific embodiments of the invention are described in dependent claims.

This device makes it possible to separate the device from the aircraft used since, as it is transported externally, in the same way as a cargo basket, it does not need any type of approval, but simply to comply with the basket-specific specifications for each helicopter (i.e. essentially weight, centering, center of gravity, and dimensions) established by the aircraft manufacturer and/or operator. Thus, it is not treated like on-board system, but rather as an external load.

Another advantage over the prior art is that the device is operated remotely. In other words, unlike in the cited documents, the operator is inside the cabin of the aircraft or, if the aircraft is unmanned, at the actual ground control console.

The aim of the present invention is to wash wind turbine blades and structures. Wind-power structures are currently cleaned using ropes or by lowering a basket along the mast, taking 1.5 days to complete the process of cleaning the structure, with the consequent loss of production and risk for workers. Compared with these systems, the present invention allows the same structure to be cleaned in approximately 10-20 minutes using biodegradable detergents. In addition, if de-icing operations are to be carried out, the device of the invention optionally has a heating unit with a pellet burner configured to heat the water to approximately 80°C, which is subsequently mixed with anti-freeze. In these cases, the productivity of the wind farm can be increased by 100% and the use of fossil fuels to cover periods of inactivity can be reduced.

Likewise, it simultaneously incorporates a gyro-stabilized filming system that allows thorough inspection of the structures by means of high-resolution video and thermographic equipment, thus doing away with the extra costs involved in having to hire another supplier to perform periodic inspection.

The present invention also relates to providing a device for washing and inspecting photovoltaic installations. Pollution, dust or saltpeter can all reduce the solar collection capacity of panels, thus causing performance losses. Photovoltaic panels need to be washed periodically, but in facilities that have a large number of panels, cleaning is a very slow, difficult and expensive task. However, thanks to the invention, as with wind farms, it is possible to reduce cleaning costs and exponentially increase the performance of the facilities. In addition, the visual, HD, and IR inspection of the panels is carried out simultaneously, thus avoiding the extra cost of hiring an inspection company.

Another aim of the present invention is the washing of insulators and simultaneous inspection of high-voltage lines. Current systems for cleaning insulators using existing helicopters (in practice, only two helicopter models) have a number of drawbacks: the distance of the cleaning water jet is 1.5 meters; they are only approved for two helicopter models; it is necessary to keep the helicopter door open so that the operator can use the cleaning device; the cleaning equipment is secured to the chassis of the helicopter, which makes it difficult to position the helicopter with respect to the wind; there is constant danger due to the proximity of the operation to the lines; current systems are unable to wash the central insulator in most high-voltage lines.

However, these problems are solved in the present invention, which also adds the possibility of using a biodegradable, dielectric detergent, as well as of simultaneously performing thermographic and high-definition visual inspection, avoiding having to hire two separate services.

Another aim of the present invention is to fight fires in urban and forested areas. Thanks to the present invention, a helicopter can enter urban areas to extinguish fires, reaching heights at which current ladders or cranes used by fire fighters are unable to operate. At the same time, the device of the invention records and broadcasts live images thanks to its gyro-stabilized filming system and thermographic camera that makes it possible, even though smoke, to distinguish the presence of people in a living space or to inform, while attacking the fire, on the hot spots in the area. In addition, in forested areas it allows directional projection of liquids or complete emptying of the tank.

In other words, compared with manned aircraft, the present invention overcomes the limitations of lack of visibility due to smoke, wind, and in particular nightfall, which forces these aircraft to retire. However, the present invention, particularly when it can be operated by remote control, can enter areas filled with smoke or with strong winds and operate at night without risk for people, being able to broadcast visual and thermographic images in real time via a single unit or with a swarm of units, both in urban and forested areas.

Throughout the description and claims the word "comprises" and its variants do not intend to exclude other technical features, additives, components, or steps. For a person skilled in the art, other subjects, advantages, and characteristics of the invention will emerge partly from the description and partly from the practice of the invention. The following examples and drawings are provided by way of illustration and are not intended to have a limiting effect on the present invention. In addition, the present invention covers all possible combinations of particular and preferred embodiments indicated herein.

### BRIEF DESCRIPTION OF THE FIGURES

Next, a series of drawings that help to better understand the invention and that expressly relate to an embodiment of said invention that is presented as a non-limiting example thereof is described very briefly.

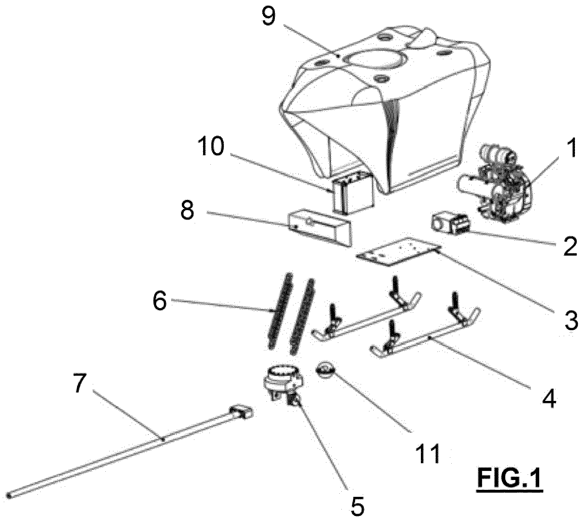

Figure 1 shows an exploded view of the cleaning device of the present invention.
Figure 2 shows a view of the device of figure 1 transported by a helicopter.
Figure 3 shows a schematic representation of the device of the invention, air-transported autonomously by an unmanned aerial vehicle or drone.
Figure 4 shows a second schematic view of the device of figure 3.

### DISCLOSURE OF A DETAILED EMBODIMENT OF THE INVENTION

As indicated below, the accompanying figures use the following numerical references that integrate the air-transportable device for projecting pressurized liquid (100) that is the subject of the present invention:

| | |
|---|---|
| 1: combustion engine | 9: water tank |
| 2: pressurized water pump | 10: automaton |
| 3: chassis base | 11: gyro-stabilized device |
| 4: cushioned skates | 100: air-transportable device |
| 5: rotating head | 200: helicopter |
| 6: folding arms | 300: control console |
| 7: lance or pole | 400: fastening straps |
| 8: fuel tank | 500: unmanned aerial vehicle |

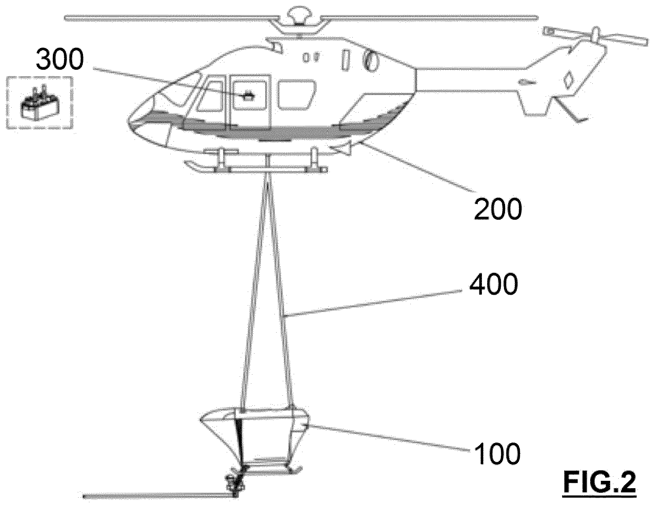

The water tank (9) is made of polyester fiber for hot water at a maximum temperature of 80°C so that it can be used in de-icing tasks, if necessary. In addition, the water tank (9) comprises several bulkhead walls to maintain stability during its transport as a basket of the aircraft or helicopter (200), as best seen in figure 2. In addition, the water tank (9) comprises an internal structure of four aluminum struts for the assembly, providing rigidity to the entire structure, in addition to supporting two shock-absorbing skates (4) that allow the entire device (100) to be supported on the ground during both the take-off and the landing of the aircraft (200). Finally, the water tank (9) comprises, at the top, four anchor points for cables or winches, which are configured as the straps (400) for fastening the cleaning device (100) to the helicopter (200).

The water tank (9) is connected to a soap tank and additionally includes side doors for quick emptying of the tank (9) in case of emergency or for extinguishing forest fires. In addition, the water is loaded into the tank by means of an automatic suction pump with suction hose hanging under the equipment.

In a tunnel inside the water tank (9), the cleaning device (100) comprises a 20 to 40 HP combustion engine (1) in various embodiments, as well as a pressurized water pump (2) of the type with high-pressure pistons, for supplying 60 liters/minute of water at up to 250 bar pressure in a configuration for cleaning wind or photovoltaic facilities, or else a pump for up to 850 liters/minute of water at 20 bar in a configuration suitable for extinguishing fires. The combustion engine (1) is supplied from a fuel tank (8), while the pressurized water pump (2) is completed with its corresponding safety valves, pulley transmission, and timing belt.

The device (100) comprises two folding arms (6) actuated by a linear actuator to raise and lower a washing head (5, 7). The washing head is made up of a rotating head (5), which can rotate through 340° horizontally and 120° vertically, with rotary fittings for the passage of water to a lance or pole (7) having a length of 3 to 6 meters, with nozzles for pressure washing or simple water projection, depending on the purpose for which the device (100) is to be used.

The device (100) is completed with a gyro-stabilized inspection device (11) comprising a plurality of LED spotlights and a high-definition camera (FHD or 4K), as well as an infrared (IR) camera which, being aligned with the lance (7), is mounted on the rotating head (5), which allows it to be used for inspection in any condition.

One of the advantages of the present invention is its versatility of use, since the primary use of the device (100) can be changed with minimal changes, such as the power of the combustion engine (1) (preferably, 15-30 HP with electric starting for the fire-extinguishing model and, preferably, 20-40 HP with electric starting for the cleaning configuration) or the type of pressurized water pump (2) (preferably 850 liters for fire extinguishing and, preferably, piston pump delivering 30 to 80 liters at 250 bar for high-pressure cleaning).

The device (100) is operated by an operator from inside the helicopter (200) via a control console (300) that communicates with the device (100) through the automaton (10). This automaton (10) is a PLC or, in general, any programmable electronic device configured to execute a program or programs stored in a memory, where said program or programs comprise instructions to execute: (a) the start and execution of the cleaning or extinguishing functions when a minimum altitude is reached; (b) generating an alarm on the console (300) when the helicopter (200) descends to a minimum altitude, placing the lance or pole (7) in the central position, raising the head, and stopping the engine (1).

In addition, the following tables show the inputs and outputs that preferably configure the input, output, and communication signals between the automaton (10) and the console (300) for the correct execution of the cleaning or fire-extinguishing functions:

**Table I. Console (300) outputs to automaton (10)**

| | |
|---|---|
| Joystick for rotating lance (7) | Soap valve ON/OFF button |
| Joystick for raising lance (7) | Water pressure or shut-off ON/OFF button |
| Joystick for camera movement functions | Button for raising and lowering the head |
| Engine (1) start-stop buttons | Two-position engine (1) throttle button |
| Video camera switch | Gyro-stabilized device (11) controls |
| LED light switch | Thermographic camera control |
| Output for pilot's external control screen | 24 V power input |

**Table II Console (300) inputs from automaton (10)**

| | |
|---|---|
| Counter of flight hours | Counter of device (100) engine (1) hours |
| Landed position, with head (5) folded horizontally | Head (5) extended indicator |
| Head (5) retracted indicator alarm according to altimeter | Trigger indicator |
| Water shortage or level warning | Engine (1) RPM |
| Engine (1) start/stop | Distance to target |
| Distance from device (100) to ground | Range finder |
| Artificial horizon indicator of the device (100) | Soap tank level |
| Water tank (9) level | Position with respect to the longitudinal axis of the aircraft |
| Fuel tank (8) level | Water pressure regulator |
| Water pressure indicator | Water tank (9) temperature |
| Outside temperature | Water conductivity meter |
| RECORD/PAUSE camera control | GPS coordinates |
| Centering target | Compass |

The air-transportable device (100) as described allows quick access and immediate response to any incident. In addition, the air-transportable device (100) can be placed at a variable height by means of straps with lengths of 10, 25, 20, 25 or 30 meters. The device can be refilled with 1,000 liters/minute from a truck, a swimming pool, a river, a lake, or any other water source.

In addition, the effective distance of the water jet is adjusted by a pressure gauge and a flowmeter, regulating the effective distance up to 50 meters from the nozzle.

The cost differences between another washing method and the air-transportable one is very considerable, making this invention the most advantageous method even in economic terms. The cost of cleaning is very similar in all methods, but the difference in production time is very considerable, while also performing a complete inspection of the structure.

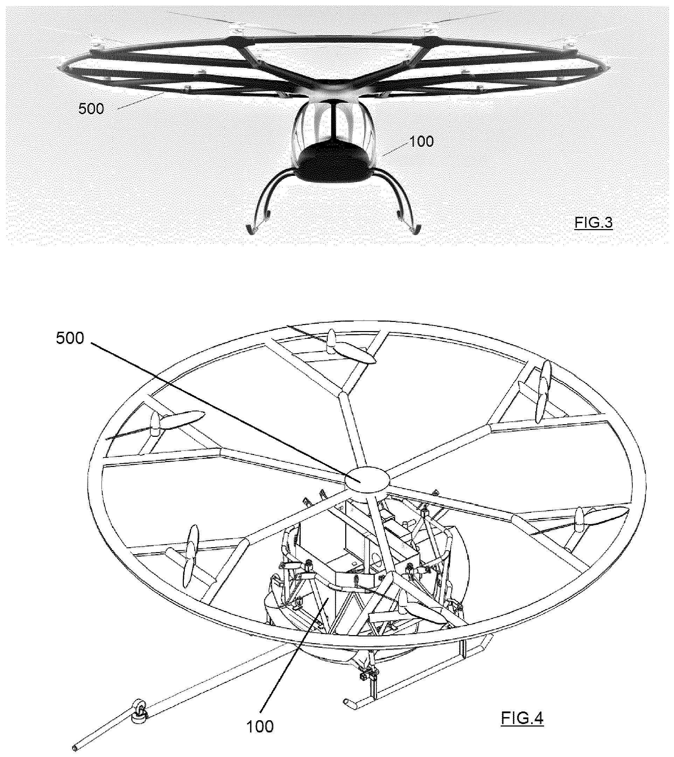

In a second embodiment of the invention, shown in figures 3 and 4, the air-transportable device (100) is operated by an unmanned aerial vehicle (500) such as a drone. For this, the air-transportable device (100) is secured to the bottom of a structure of an unmanned aerial vehicle (500) of the type configured for vertical take-off and landing. Thus, the unmanned aerial vehicle (500) comprises autonomous navigation means, ground control, and is configured for vertical take-off and landing, as well as for hovering.

Finally, we should highlight the differences between the use of unmanned aerial vehicles (500) and helicopters (200):

| Helicopter (200) | | Unmanned aerial vehicle (500) | |
|---|---|---|---|
| | • Average price for one hour of flight: €2,800 | | • Average price for one hour of flight: €12 |
| | • Effective hours per day: maximum 6; 8 hours/day with a 20-minute break every hour | | • Effective hours per day: 20 |
| | | | • CO2 emissions per hour: 0; it is electric |
| | • CO2 emissions per hour: 390 kg | | • Liters of water projected/day: 40,000; 2,000 liters/hourx20 hours |
| | • Liters of water projected/day: 24,000; 4,000 liters/hour x 6 hours | | |

## Claims

1. An air-transportable device (100) for projecting pressurized liquid over a surface, which comprises:
a liquid tank (9) with an internal channel comprising a combustion engine (1) and a water pump (2);
wherein the liquid tank (9) comprises a plurality of internal bulkheads and struts;
and wherein the air-transportable device (100) further comprises:
cushioned skates (4) rigidly connected to the lower surface thereof;
two folding arms (6) actuated by a linear actuator to raise and lower a washing head (5,7); and a gyro-stabilized inspection device (11) comprising a plurality of LED bulbs, and at least one plurality of cameras, said gyro-stabilized inspection device (11) being mounted on said washing head (5, 7); and
wherein the air-transportable device (100) is configured to be secured by the upper surface thereof to a helicopter (200) by means of a plurality of straps (400) or to the bottom of a structure of an unmanned aerial vehicle (500) configured for vertical take-off and landing.

2. The device (100) according to claim 1, wherein the washing head (5, 7) is made up of a rotating head (5) which can rotate through 340° horizontally and 120° vertically, with rotary fittings for the passage of water to a lance or pole (7) having a length of 3 to 6 meters, with nozzles for pressure washing or water projection.

3. The device (100) according to claim 1, wherein the gyro-stabilized inspection device (11) comprises at least one high-definition camera and at least one infrared camera.

4. The device (100) according to claim 1, wherein the liquid tank (9) comprises a plurality of side gates for quickly emptying the liquid tank (9).

5. A system comprising:
a helicopter (200) comprising a plurality of straps (400) connected, like an external basket, to an autonomous, air-transportable device (100) for projecting pressurized liquid according to any of claims 1 to 4, wherein the helicopter (200) comprises:
a control console (300) that communicates with the device (100) via an automaton (10); wherein said automaton (10) is a programmable electronic device configured to execute a program or programs stored in a memory, wherein said program or programs comprise instructions to execute:
(a) the start and execution of the cleaning or extinguishing functions when a minimum altitude is reached; and
(b) generating an alarm on the console (300) when the aircraft (200) descends to a minimum altitude, placing the lance or pole (7) in the central position, raising the rotary head (5), and stopping the engine (1);
or
an unmanned aerial vehicle (500) configured for vertical take-off and landing, as well as for hovering that comprises autonomous navigation means, ground control, and further comprising an air-transportable device (100) according to any of the claims 1 to 4 secured to the bottom of a structure of an unmanned aerial vehicle (500).

## Patentansprüche

1. Lufttransportierbare Vorrichtung (100) zum Ausstoßen von unter Druck stehender Flüssigkeit auf eine Oberfläche,
die umfasst:
einen Flüssigkeitstank (9) mit einem inneren Kanal, der einen Verbrennungsmotor (1) und eine Wasserpumpe (2) umfasst;
wobei der Flüssigkeitstank (9) eine Vielzahl von inneren Schotten und Streben umfasst;
und wobei die lufttransportierbare Vorrichtung (100) ferner umfasst:
gepolsterte Schlittschuhe (4), die starr mit ihrer Unterseite verbunden sind;
zwei Falt arme (6), die durch einen linearen Aktuator betätigt werden, um einen Waschkopf (5, 7) anzuheben und abzusenken; und eine kreiselstabilisierte Inspektionsvorrichtung (11), die eine Vielzahl von LED-Lampen und mindestens eine Vielzahl von Kameras umfasst, wobei die kreiselstabilisierte Inspektionsvorrichtung (11) an dem Waschkopf (5, 7) angebracht ist; und
wobei die lufttransportierbare Vorrichtung (100) so konfiguriert ist, dass sie mit ihrer Oberseite an einem Hubschrauber (200) mittels einer Vielzahl von Gurten (400) oder an der Unterseite einer Struktur eines unbemannten Luftfahrzeugs (500), das für vertikalen Start und Landung konfiguriert ist, befestigt werden kann.

2. Vorrichtung (100) nach Anspruch 1, **dadurch gekennzeichnet, dass** der Waschkopf (5, 7) aus einem rotierenden Kopf (5) besteht, der sich horizontal um 340° und vertikal um 120° drehen kann, mit drehbaren Armaturen für den Durchgang von Wasser zu einer Lanze oder Stange (7) mit einer Länge von 3 bis 6 Metern, mit Düsen für die Druckwäsche oder den Wasserwurf.

3. Vorrichtung (100) nach Anspruch 1, wobei die kreiselstabilisierte Inspektionsvorrichtung (11) mindestens eine hochauflösende Kamera und mindestens eine Infrarotkamera umfasst.

4. Vorrichtung (100) nach Anspruch 1, wobei der Flüssigkeitstank (9) eine Vielzahl von Seitentoren zum schnellen Entleeren des Flüssigkeitstanks (9) aufweist.

5. Ein System, das Folgendes umfasst:
einen Hubschrauber (200) mit einer Vielzahl von Gurten (400),
die wie ein externer Korb mit einer autonomen,
lufttransportierbaren Vorrichtung (100) zum Ausbringen von Druckflüssigkeit nach einem der Ansprüche 1 bis 4 verbunden sind, wobei der Hubschrauber (200) umfasst:
eine Steuerkonsole (300), die mit der Vorrichtung (100) über einen Automaten (10) kommuniziert; wobei der Automat (10) eine programmierbare elektronische Vorrichtung ist, die so konfiguriert ist, dass sie ein Programm oder Programme ausführt, die in einem Speicher gespeichert sind, wobei das Programm oder die Programme Anweisungen zur Ausführung umfassen:
(a) den Start und die Ausführung der Reinigungs- oder Löschfunktionen, wenn eine Mindesthöhe erreicht wird; und
(b) das Erzeugen eines Alarms auf der Konsole (300), wenn das Flugzeug (200) auf eine Mindesthöhe sinkt, die Lanze oder den Stab (7) in die zentrale Position bringt, den Dreh Kopf (5) anhebt und den Motor (1) stoppt;
oder
ein unbemanntes Luftfahrzeug (500), das für vertikale Starts und Landungen sowie für den Schwebeflug konfiguriert ist, das autonome Navigationsmittel und eine Bodensteuerung umfasst und ferner eine lufttransportierbare Vorrichtung (100) nach einem der Ansprüche 1 bis 4 umfasst, die an der Unterseite einer Struktur eines unbemannten Luftfahrzeugs (500) befestigt ist.

## Revendications

1. Un dispositif transportable par air (100) pour projeter un liquide sous pression sur une surface,
qui comprend
un réservoir de liquide (9) avec un canal interne comprenant un moteur à combustion (1) et une pompe à eau (2) ;
dans lequel le réservoir de liquide (9) comprend une pluralité de cloisons internes et d'entretoises ;
et dans lequel le dispositif aérotransportable (100) comprend en outre :
des patins amortisseurs (4) reliés de manière rigide à leur surface inférieure ;
deux bras pliants (6) actionnés par un actionneur linéaire pour lever et abaisser une tête de lavage (5, 7) ; et un dispositif d'inspection gyrostabilisé (11) comprenant une pluralité d'ampoules LED, et au moins une pluralité de caméras, ledit dispositif d'inspection gyrostabilisé (11) étant monté sur ladite tête de lavage (5, 7) ; et
dans lequel le dispositif aérotransportable (100) est configuré pour être fixé par sa surface supérieure à un hélicoptère (200) au moyen d'une pluralité de sangles (400) ou au bas d'une structure d'un véhicule aérien sans pilote (500) configuré pour le décollage et l'atterrissage verticaux.

2. Le dispositif (100) selon la revendication 1, dans lequel la tête de lavage (5, 7) est constituée d'une tête rotative (5) pouvant tourner de 340° horizontalement et de 120° verticalement, avec des raccords rotatifs pour le passage de l'eau vers une lance ou une perche (7) d'une longueur de 3 à 6 mètres, avec des buses pour le lavage sous pression ou la projection d'eau.

3. Dispositif (100) selon la revendication 1, dans lequel le dispositif d'inspection gyrostabilisé (11) comprend au moins une caméra haute définition et au moins une caméra infrarouge.

4. Le dispositif (100) selon la revendication 1, dans lequel le réservoir de liquide (9) comprend une pluralité de portes latérales pour vider rapidement le réservoir de liquide (9).

5. Un système comprenant :
un hélicoptère (200) comprenant une pluralité de sangles (400) reliées, comme une nacelle externe, à un dispositif autonome et aérotransportable (100) de projection de liquide sous pression selon l'une quelconque des revendications 1 à 4, dans lequel l'hélicoptère (200) comprend :
une console de commande (300) qui communique avec le dispositif (100) par l'intermédiaire d'un automate (10) ; dans lequel ledit automate (10) est un dispositif électronique programmable configuré pour exécuter un ou des programmes stockés dans une mémoire, dans lequel ledit ou lesdits programmes comprennent des instructions pour exécuter :
(a) le démarrage et l'exécution des fonctions de nettoyage ou d'extinction lorsqu'une altitude minimale est atteinte ; et
(b) la génération d'une alarme sur la console (300) lorsque l'aéronef (200) descend à une altitude minimale, en plaçant la lance ou la perche (7) en position centrale, en relevant la tête rotative (5) et en arrêtant le moteur (1) ;
Ou,
un véhicule aérien sans pilote (500) configuré pour le décollage et l'atterrissage verticaux, ainsi que pour le vol stationnaire qui comprend des moyens de navigation autonomes, un contrôle au sol, et comprenant en outre un dispositif aérotransportable (100) selon l'une quelconque des revendications 1 à 4 fixés au bas d'une structure du véhicule aérien sans pilote (500).
